# EUROPÄISCHE PATENTSCHRIFT

(11) **EP 0 892 730 B1**
(45) Veröffentlichungstag und Bekanntmachung des Hinweises auf die Patenterteilung: **07.11.2001**
(21) Anmeldenummer: 98904125.6
(22) Anmeldetag: 23.01.1998
(51) Int. Cl.: B60R 16/02

(54) **VERFAHREN UND ANORDNUNG ZUR ERHÖHUNG DER STARTSICHERHEIT EINES VERBRENNUNGSMOTORS**
METHOD AND ARRANGEMENT FOR INCREASING THE STARTING RELIABILITY OF AN INTERNAL COMBUSTION ENGINE
PROCEDE ET DISPOSITIF POUR AUGMENTER LA FIABILITE AU DEMARRAGE D'UN MOTEUR A COMBUSTION INTERNE

(30) Priorität: 14.02.1997 DE 19705634
(43) Veröffentlichungstag der Anmeldung: 27.01.1999
(73) Patentinhaber: DaimlerChrysler AG, 70567 Stuttgart (DE)
(72) Erfinder: SCHÖNER, Hans-Peter, D-64397 Modautal (DE)
(74) Vertreter: Maute, Hans-Jürgen, Dipl.-Ing.
(86) Internationale Anmeldenummer: EP9800358
(87) Internationale Veröffentlichungsnummer: WO9835855

(56) Entgegenhaltungen:
- EP-A- 0 583 630
- EP-A- 0 753 925
- US-A- 4 044 293
- US-A- 5 107 197
- US-A- 5 194 799

## Beschreibung

Die Erfindung bezieht sich auf ein Verfahren und eine Anordnung zur Erhöhung der Startsicherheit eines Verbrennungsmotors mit einer aufladbaren Starterbatterie gemäß dem Oberbegriff des unabhängigen Anspruchs.

In einem Kfz (oder in anderen primär aus einem Verbrennungsmotor mit Energie versorgten Systemen) ist die Starterbatterie des Verbrennungsmotors eine der wichtigsten Voraussetzungen für die Sicherstellung der Betriebsfähigkeit. Normalerweise wird der Verbrennungsmotor durch einen elektrischen Anlasser gestartet, welcher die Energie für den Startvorgang aus einer Starterbatterie bezieht. Der Anlasser muß dazu für kurze Zeit ein Drehmoment aufbringen, welches in der Lage ist. den Verbrennungsmotor bei einer gewissen Mindestdrehzahl durchzudrehen. Dazu muß durch den Anlasser ein genügend großer Strom fließen und eine ausreichend hohe Spannung anliegen. Ist die Starterbatterie sehr kalt, teilweise entladen oder stark gealtert, kann der Innenwiderstand der Batterie so hoch werden, daß Strom und Spannung nicht in ausreichendem Maße zur Verfügung stehen, um den Startvorgang sicherzustellen.

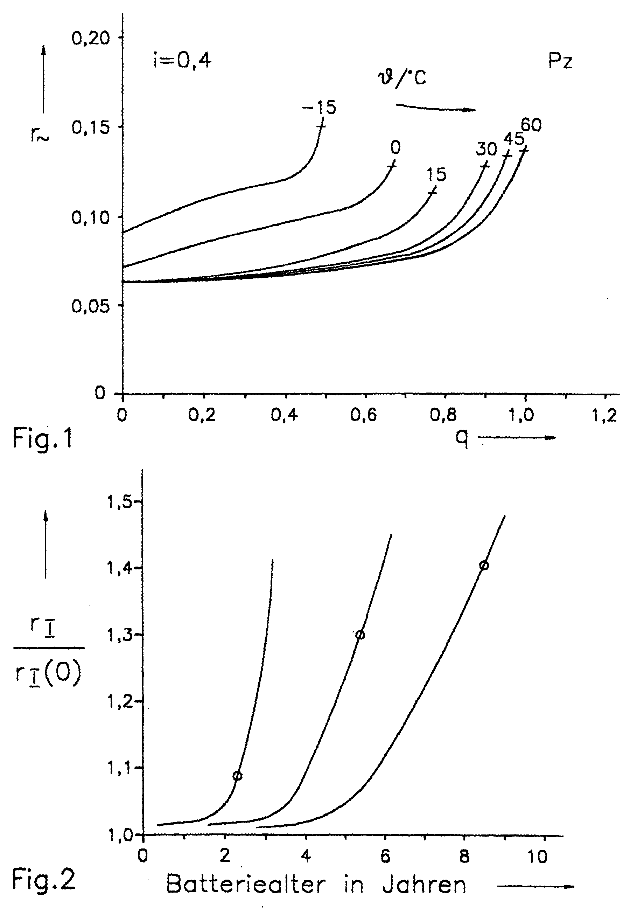

Eine zum Starten eines Verbrennungsmotors verwendete Batterie, im folgenden auch Starterbatterie genannt, wird auf geringen Innenwiderstand (das ist gleichbedeutend mit hoher Leistungsdichte) ausgelegt, um eine möglichst hohe Startfähigkeit sicherzustellen. Die Abhängigkeit des Innenwiderstandes von der Batterietemperatur, dem Ladezustand der Batterie und dem Alterungszustand der Batterie ist in den Figuren 1 bis 3 dargestellt. Die Auslegung der Batterie erfolgt normalerweise so, daß eine vollgeladene, neue Batterie bis zu einer bestimmten unteren Temperaturgrenze startfähig ist. Dies entspricht in erster Linie einem maximal zulässigen Innenwiderstand bei dieser Temperatur. Wie aus den Figuren 1 bis 3 hervorgeht, wird durch Entladung oder Alterung der Batterie der Innenwiderstand erhöht, d.h. die Startfähigkeit wird nur bis zu weniger tiefen Temperaturen sichergestellt.

Durch die Betriebsbedingungen der in einem konventionellen Bordnetz (mit einer Batterie) gleichzeitig von der Batterie versorgten anderen Verbraucher kann eine teilweise Entladung der Starterbatterie nicht grundsätzlich vermieden werden. Auch die Batteriealterung, welche (insbesondere bei auf Leistungsdichte statt auf Energiedichte bzw. Lebensdauer ausgelegten Batterien) durch Entlade-/Ladezyklen der Batterie beschleunigt wird, ist unvermeidbar. Aufgrund dieser Eigenschaften der Batterie ist das Starten des Verbrennungsmotors unter gewissen Bedingungen nicht mehr möglich. Da der Verbrennungsmotor bei niedrigen Temperaturen zudem höhere Ansprüche an das vom Anlasser zu liefernde Drehmoment und Drehzahl stellt, scheitert der Anlaßvorgang in der Jahreszeit mit stark sinkenden Temperaturen häufig weitgehend unvorhergesehen.

Es ist bekannt, bei tiefen Temperaturen Starterbatterien aufzuheizen, um die Stromabgabe zu verbessern. (W093/13568). Zwar läßt sich damit der Innenwiderstand der Batterie erniedrigen, jedoch kann der Verbrennungsmotor dann nicht mehr gestartet werden, wenn die Ladung der Batterie zu gering ist. Da der Strom für das Aufheizen der Batterie selbst entnommen wird, wird die durch das Aufheizen erreichte verbesserte Stromabgabe durch die Batterieentladung bei der Entnahme des Aufheizstroms teilweise wieder aufgehoben.

Es empfiehlt sich, im Bordnetz neben der eigentlichen Starterbatterie, eine weitere Batterie, im folgenden genannt Speicherbatterie, vorzusehen, welche nicht auf geringen Innenwiderstand, sondern auf hohe Energiedichte bzw. lange Lebensdauer ausgelegt ist. An der Starterbatterie werden vorzugsweise Verbraucher angeschlossen, welche kurzzeitig hohe Ströme benötigen (leistungsstarke Kurzzeitverbraucher), aber nicht unbedingt große Energien aus der Batterie entnehmen. An der Speicherbatterie sind vorzugsweise Verbraucher anzuschließen, welche eher eine stabile Spannung benötigen (Steuergeräte, Informationselektronik) oder über längere Zeit mit eher geringen Strömen (ohne Betrieb eines vom Verbrennungsmotor angetriebenen Generators) versorgt werden müssen.

In einem solchen Bordnetz sind zweckmäßigerweise während des Startvorgangs die beiden Batterien im wesentlichen voneinander entkoppelt, um einerseits dem Anlasser die volle Stromabgabefähigkeit der Starterbatterie bereitzustellen und andererseits den dabei auftretenden Spannungseinbruch der Starterbatterie nicht auf die an der Speicherbatterie angeschlossenen Steuergeräte und Hilfsspannungsversorgung durchschlagen zu lassen. Bei einer gealterten oder tiefentladenen Batterie gilt deswegen für das mögliche Scheitern des Startvorgangs des Verbrennungsmotors das gleiche wie bei Bordnetzen mit nur einer Batterie, auch wenn die Entladung der Starterbatterie durch andere Verbraucher mittels Last-Management zum Teil vermieden werden kann.

In der DE-C1 41 38 943 ist gemäß dem Oberbegrift des Anspruchs 1 eine Anordnung offenbart, bei der eine Starterbatterie durch eine Speicherbatterie mit einem Aufladestrom versorgt wird, so daß eine zum Starten des Motors notwendige Ladung in der Starterbatterie verfügbar ist. Die Starterbatterie wird dabei von der Speicherbatterie permanent auf einem hohen Ladungsniveau gehalten.

Hier setzt die Erfindung ein. der das Problem zugrunde liegt, ein Verfahren und eine Anordnung zum Bereitstellen einer für das Starten eines Verbrennungsmotors ausreichenden Energie bzw. Leistungsfähigkeit mit einer aufladbaren Starterbatterie auch bei tiefen Temperaturen zu entwikkeln. Die Leistungsfähigkeit äußert sich durch ein ausreichend hohes Spannungsniveau für das Starten während der Abgabe von Starterströmen.

Das Problem wird bei einem Verfahren der eingangs beschriebenen Art erfindungsgemäß dadurch gelöst, daß nach einem mißlungenen Startvorgang mit der Starterbatterie aus einer weiteren Batterie ein Aufladestrom in die Starterbatterie eingespeist wird, bis in der Starterbatterie wenigstens die für das Starten des Verbrennungsmotors notwendige Ladung vorhanden ist. Nach einem vergeblichen Startversuch wird erst dann, wenn die Stanerbatterie die für das Starten des Verbrennungsmotors benötigte Ladung hat, der Motor mittels des Anlassers gestartet. Die Größe der Ladung ist von Verbrennungsmotor zu Verbrennungsmotor verschieden.

Vorzugsweise wird die Starterbatterie mit einem kleinen Strom im Vergleich zu dem vom Anlasser benötigten Strom geladen. Auf diese Weise werden sowohl die Starterbatterie als auch die weitere Batterie d.h. die Speicherbatterie geschont, zumal die Speicherbatterie sinnvollerweise nicht auf die Abgabe hoher Starterströme ausgelegt ist.

Nach dem Aufladen der Starterbatterie aus der Speicherbatterie zeigt die Starterbatterie einen deutlich niedrigeren Innenwiderstand als vorher, sie ist nun meist in der Lage, den Anlaßvorgang erfolgreich durchzuführen. Falls der Motor trotzdem nicht startet, wird der Speicherbatterie vor dem zweiten Anlaßversuch eine Erholungspause z.B. in der Größenordnung von 20s gewährt werden.

Die Notwendigkeit eines solchen zweiten Startversuchs nach zweimaliger Aufladung durch die Speicherbatterie ist ein Hinweis auf eine deutliche Alterung der Starterbatterie und wird zum Anlaß für einen Hinweis genommen, daß die Starterbatterie gegen eine neue auszuwechseln ist. z.B. durch ein Hinweissignal an den Fahrer.

Für die Anordnung wird das Problem erfindungsgemäß dadurch gelöst, daß im Bordnetz ein mit der Speicherbatterie und der Starterbatterie verbindbarer Umrichter vorgesehen ist, der die Spannung der Speicherbatterie in die Ladespannung der Starterbatterie umsetzt. Der Umrichter, der. insbesondere einen geregelten Ladestrom in die Starterbatterie einspeist, bewirkt eine Aufladung mit geringem Strom für eine gewisse Zeit. Insbesondere ist die Ladezeit der Starterbatterie bei einem konstanten Ladestrom vorgegeben. Der Ladestrom und die Kapazität der Speicherbatterie sind so bemessen, daß die Speicherbatterie die Ladung an die Starterbatterie ohne Beeinträchtigung ihrer sonstigen Aufgaben abgeben kann.

Die Erfindung wird im folgenden anhand eines in einer Zeichnung dargestellten Ausführungsbeispiels näher beschrieben, aus dem sich weitere Einzelheiten und Vorteile ergeben.

Es zeigen:
- Fig. 1: Diagramme mit einem für eine aufladbare Batterie typischen Innenwiderstand in Abhängigkeit vom Entladegrad mit der Batterietemperatur als Parameter,
- Fig. 2: Diagramme der zeitlichen Änderung des Wechselstromwiderstands von Batterien als Funktion des Batteriealters,
- Fig. 3: Diagramme der Innenwiderstände einer Traktionsbatterie als Funktion des Entladegrads bei einer neuen und einer gealterten Batterie,
- Fig. 4: eine Anordnung zum Bereitstellen einer für das Starten eines Verbrennungsmotors ausreichenden Energie mit einer Starterbatterie und eine Speicherbatterie eines Bordnetzes,
- Fig. 5a, b, c und d: Schnitte eines Teilbereichs einer aufladbaren Batterie in vier verschiedenen Ladezuständen der Batterie,

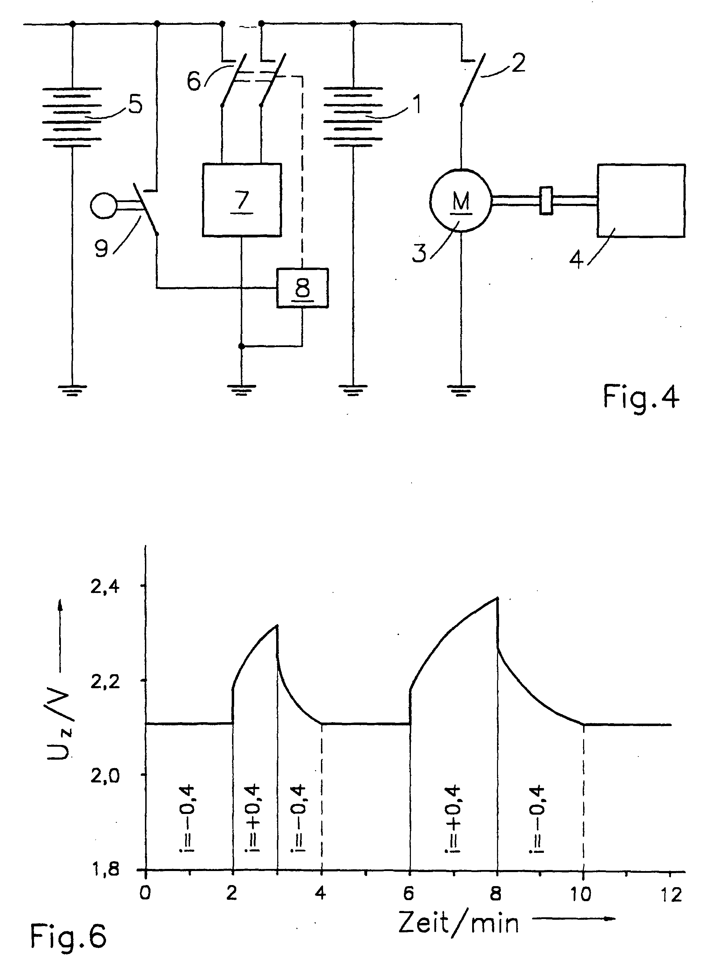

- Fig. 6: die Spannung einer Starterbatterie in Abhängigkeit von Lade- und Entladezeiträumen.

Der Batterie-Innenwiderstand rₗ, d.h. der Wechselstromwiderstand, ist in Fig. 1 in Ω in Abhängigkeit vom Entladegrad 9 (bei Konstantstromentladung) dargestellt. Parameter ist die Elektrolyt-Temperatur. Der Innenwiderstand nimmt mit zunehmendem Entladegrad und mit abnehmender Temperatur zu. Hieraus ist ersichtlich, daß die Stromabgabefähigkeit nicht nur bei hoher Entladung sondern auch bei geringer Temperatur beeinträchtigt ist. Die Fig. 2 zeigt den relativen Wechselstromwiderstand, d.h. das Verhältnis des Widerstands bezogen auf den Widerstand der neuen Batterie in Abhängigkeit vom Batteriealter in Jahren für verschiedene 600 Ah-Batterien. Markiert sind die Punkte, an denen die Batterien noch 50% der Anfangskapazität haben.

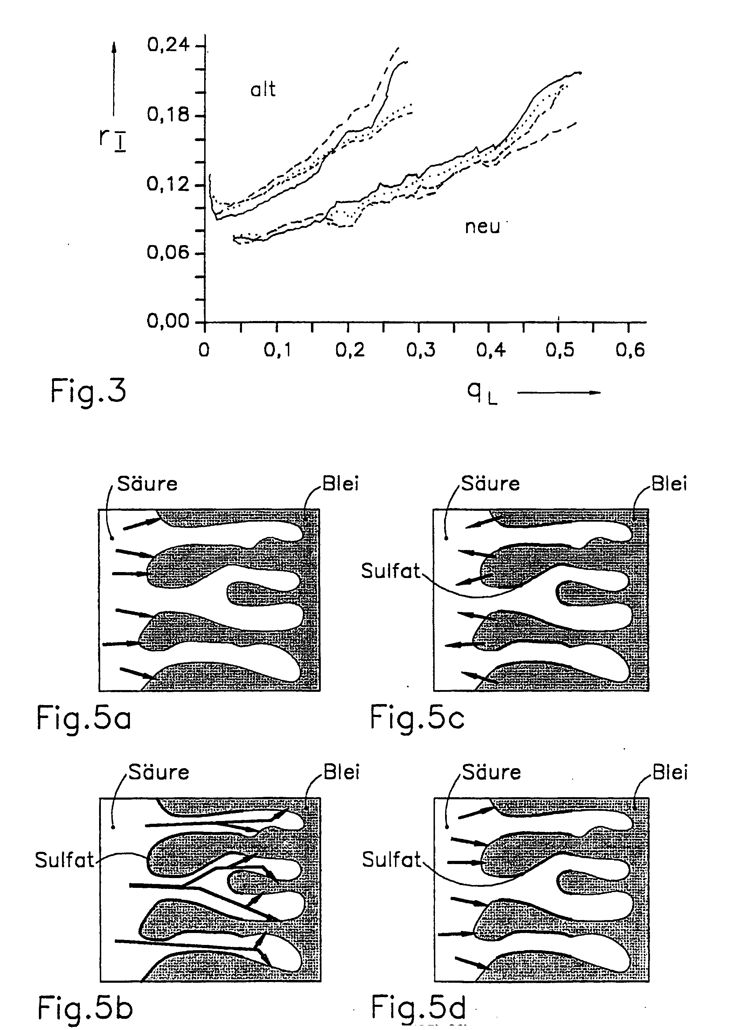

In Fig. 3 ist der Innenwiderstand r_{I} einer Traktionsbatterie in Abhängigkeit vom Entladegrad bei neuer und gealterter Batterie dargestellt.

Eine Anordnung zur Bereitstellung einer für das Starten eines Verbrennungsmotors ausreichenden Energie und Leistungsfähigkeit mittels einer Batterie ist in Fig. 4 dargestellt. Die Anordnung gemäß Fig. 4 weist eine Starterbatterie 1 auf, die über einen Schalter 2 mit einem Anlasser 3 verbunden ist, an dem ein Verbrennungsmotor 4 über eine nicht näher bezeichnete Kupplung angeschossen ist, die im Lauf des Verbrennungsmotors 4 offen ist.

Die Starterbatterie 1 ist in einem Bordnetz beispielsweise eines Landfahrzeugs, eines Schiffes oder eines Flugzeugs oder auch einer Notstromversorgung für das Starten des Verbrennungsmotors 4 vorgesehen und entsprechend, d.h. für hohe Leistungsdichte und hohe Stromspitzen ausgelegt. Im Bordnetz ist weiterhin eine Speicherbatterie 5 vorgesehen, die andere Verbraucher des Bordnetzes wie Steuergeräte. Lampen, Informationselektronik, Pumpen usw. speist; sie ist in Richtung Energiedichte und Lebensdauer optimiert.

Die Speicherbatterie ist über einen Schalter 6, der zwei Pole hat, mit einem Urichter 7 verbunden, der ausgangsseitig über den zweiten Pol des Schalters 6 an die Starterbatterie 1 angeschlossen ist.

Der Schalter 6 ist durch ein Steuermodul 8 betätigbar, das mittels eines Schlüsselschalters 9 aktiviert wird. Alternativ wird das Steuermodul 8 durch eine geeignete Fehlstarterkennung 10, z.B. basierend auf Spannungs- 11 und Drehzahlmessung 12, aktiviert.

Der Umrichter 7 gibt einen Konstantstrom an die Starterbatterie 1 ab, wenn der Schalter 6 geschlossen ist. Das Steuermodul 8 schaltet den Schalter für eine vorgebbare Zeit ein, so daß eine bestimmte Ladungsmenge in die Starterbatterie 1 eingespeist wird, wenn z.B. der Verbrennungsmotor 3 beim Betätigen des Zündschlüssels, der den Schalter 2 schließt, nicht in Gang gesetzt wird. Die in die Starterbatterie eingespeiste Lademenge ist auf den Energieverbrauch für das Starten des Verbrennungsmotors 4 abgestimmt. Der Anlasser benötigt zum Starten des Verbrennungsmotors unter ungünstigen Bedingungen beispielsweise eine Strom von ca. 300A für ca. 3s, also ca. 900As elektrischer Ladung (dieser Wert ist von der Größe und Art des Verbrennungsmotors abhängig); diese konnte jedoch beim ersten Anlaßversuch nicht oder nur bei nicht ausreichender Spannungslage von der Starterbatterie zur Verfügung gestellt werden. Der Starterbatterie wird nun durch einen Ladevorgang mit kleinem Strom, z.B. 15A für 60s oder 10A für 90s, ebendiese Ladungsmenge aus der Speicherbatterie zugeführt. Der Ladestrom und die Kapazität der Speicherbatterie sind so bemessen, daß die Speicherbatterie diese Ladung ohne Beeinträchtigung ihrer sonstigen Aufgaben abgeben kann.

Die Wirkungsweise der kurzzeitigen Aufladung der Starterbatterie mit einem geringen Strom wird anhand der Fig. 5a, b, c und d erläutert.

Die Fig. 5 zeigt anhand einer schematischen Darstellung die Grenzfläche zwischen Säure und poröser Bleiplatte an einer Batterie-Elektrode. Fig. 5a zeigt Strompfade beim Entladen einer vollgeladenen Batterie: aufgrund des höheren spezifischen Widerstandes der Säure gegenüber den Bleigittern findet der Stromübergang an den äußeren Enden der Poren statt, der Widerstand ist relativ niedrig. Fig. 5b zeigt Strompfade beim Entladen einer teilentladenen Batterie: die durch die Entladung entstandene Sulfatschicht im Bereich des bisherigen Stromdurchgangs wirkt isolierend, so daß die Strompfade in der hochresistiven Säure sich immer weiter verlängert; somit steigt der Batteriewiderstand mit zunehmender Entladung. Fig. 5c zeigt die Strompfade beim Wiederaufladen einer teilentladenen Batterie: Die Umkehr der Stromrichtung erlaubt den Stromübergang wieder am widerstandsmäßig günstigeren äußeren Ende der Poren; der BatterieWiderstand sinkt auf deutlich kleinere Werte. Fig. 5d zeigt die Strompfade beim Entladen der so teilweise wiederaufgeladenen Batterie: der niedrige Widerstand bleibt solange erhalten, bis durch die entnommene Ladung die Sulfatlücken im äußeren Porenbereich wieder geschlossen sind.

Dies ist näherungsweise so lange der Fall, bis die neu entnommene Ladung der vorher wiedereingespeisten Ladungsmenge entspricht.

Zusätzlich zum beschriebenen Mechanismus der Sulfatschicht-Bildung und -Auflösung wirkt noch die Tatsache widerstandserniedrigend, daß durch den Ladestrom direkt an der Reaktionsstelle für die folgende Entladung alle chemischen Reaktionspartner bereitgestellt werden und dafür keine Diffusionsprozesse notwendig sind, welche zu Spannungsabfällen führen. Im Gegenteil werden die Stoffkonzentrationen so eingestellt, daß sich sogar eine Erhöhung der inneren Spannung der Batterie ergibt. Da diese Effekte in einigen Minuten (Diffusionszeitkonstante) abklingen, sollte die Wiederaufladung vorteilhafterweise kurzfristig vor der Hochstromentladung erfolgen.

Eine gemessene Spannungsantwort der Batterie auf zwei solche Zwischenladepulse und anschließende Entladung ist im Bild 6 dargestellt. Bis zum Zeitpunkt 2 min wird die Batterie 1 mit einem konstanten Strom i=0,4 entladen; zwischen Zeitpunkt 2 min und Zeitpunkt 3 min wird mit Strom i=0,4 geladen, dann wieder mit Strom i=0,4 entladen bis Zeitpunkt 6 min. Zum Zeitpunkt 4 min ist die Ladebilanz der Zwischenladung ausgeglichen; die Batterie zeigt bis exakt zu diesem Zeitpunkt eine höhere Spannungslage entsprechend einem geringerem Innenwiderstand. Das gleiche gilt für die Zeitpunkte 6 min bis 10 min, nur daß hier der Ladestrom und damit auch die höhere Spannungslage beim nachfolgenden Entladen länger andauert.

Der Ablauf des Nachladens der Starterbatterie und der darauffolgende erneute Startversuch können automatisch mittels einer Steuerung ausgeführt werden, die einen Fehlstart erkennt.

Als Äquivalent zu der weiteren Batterie wird eine Brennstoffzelle angesehen.

## Patentansprüche

1. Verfahren zur Erhöhung der Startsicherheit eines Verbrennungsmotors (4) mit einer aufladbaren Starterbatterie (1) und einer Speicherbatterie (5), welche einen Aufladestrom in die Starterbatterie (1) einspeist und zum Starten des Verbrennungsmotors (4) an der Starterbatterie (1) eine Hochstromentladung durchgeführt wird,
**dadurch gekennzeichnet,**
**daß** der Aufladestrom innerhalb eines begrenzten Zeitraums vor der Hochstromentladung über einen Schalter (6) und einen Umrichter (7) der Starterbatterie (1) eingespeist wird, bis in die Starterbatterie (1) wenigstens die für das Starten des Verbrennungsmotors notwendige Ladung eingespeichert ist, und daß der Zeitraum durch ein Steuermodul (8) so gewählt wird, daß eine durch den Aufladestrom verursachte Erhöhung der inneren Spannung der Starterbatterie (1) noch nicht vollständig abgeklungen ist.

2. Verfahren nach Anspruch 1,
**dadurch gekennzeichnet,**
**daß** die Starterbatterie (1) nach einem erfolglosen Startversuch vor der Entnahme eines weiteren Stroms aus der Speicherbatterie (5) geladen wird.

3. Verfahren nach Anspruch 1 oder 2,
**dadurch gekennzeichnet,**
**daß** der Ladestrom kleiner als der für das Starten des Verbrennungsmotors notwendige Strom ist.

4. Verfahren nach Anspruch 1,
**dadurch gekennzeichnet,**
**daß** nach der Aufladung der Starterbatterie (1) und einem erfolglosen Startversuch des Verbrennungsmotors die Speicherbatterie gegen Abgabe eines Ladestroms an die Starterbatterie kurzzeitig gesperrt wird.

5. Verfahren nach einem der vorhergehenden Ansprüche,
**dadurch gekennzeichnet,**
**daß** nach einem erfolglosen Startversuch des Verbrennungsmotors eine Meldung erzeugt wird.

6. Verfahren nach einem oder mehreren der vorhergehenden Ansprüche,
**dadurch gekennzeichnet,**
**daß** die Aufladedauer etwa 30 Sek. bis 2 Minuten dauert.

7. Verfahren nach einem der vorhergehenden Ansprüche,
**dadurch gekennzeichnet,**
**daß** der Ablauf des Nachladens der Starterbatterie und der darauf folgende erneute Startversuch automatisch auf der Basis einer Fehlstarterkennung (10) gesteuert wird.

8. Anordnung zur Durchführung des Verfahrens nach einem oder mehreren der vorhergehenden Ansprüche,
**dadurch gekennzeichnet,**
**daß** die Starterbatterie (1) über einen Stromrichter (7) mit der Speicherbatterie (1) verbindbar ist.

9. Anordnung nach Anspruch 8,
**dadurch gekennzeichnet,**
**daß** der Stromrichter (7) einen Konstantstrom ausgibt.

10. Anordnung nach Anspruch 8 oder 9,
**dadurch gekennzeichnet,**
**daß** der Stromrichter (7) für eine vorgegebene Zeit die Speicher- mit der Starterbatterie (1, 5) verbindet.

11. Anordnung nach einem oder mehreren der vorhergehenden Ansprüche,
**dadurch gekennzeichnet,**
**daß** anstelle der Speicherbatterie eine andere Energiequelle als Stromquelle vorgesehen ist.

## Claims

1. Method of increasing the starting reliability of an internal combustion engine (4) with a chargeable starter battery (1) and a storage battery (5), which supplies a charging current into the starter battery (1) and a high current discharge is undertaken at the starter battery (1) for starting of the internal combustion engine (4), **characterised in that** the charging current is supplied to the starter battery (1) within a limited time period before the high current discharge by way of a switch (6) and a rectifier (7) until at least the charge necessary for starting of the internal combustion engine is stored in the starter battery (1) and that the time period is so selected by a control module (8) that an increase, which is caused by the charging current, of the internal voltage of the starter battery (1) has not completely decayed.

2. Method according to claim 1, **characterised in that** after an unsuccessful attempt at starting the starter battery (1) is charged from the storage battery (5) before removal of a further current.

3. Method according to claim 1 or 2, **characterised in that** the charging current is smaller than the current necessary for starting of the internal combustion engine.

4. Method according to claim 1, **characterised in that** after charging of the starter battery (1) and an unsuccessful attempt at starting the internal combustion engine the storage battery is temporarily blocked against delivery of a charging current to the starter battery.

5. Method according to one of the preceding claims, **characterised in that** after an unsuccessful attempt at starting of the internal engine an alarm is produced.

6. Method according to one or more of the preceding claims, **characterised in that** the charging duration lasts for approximately 30 seconds to 2 minutes.

7. Method according to one of the preceding claims, **characterised in that** the course of the recharging of the starter battery and the renewed attempt at starting following thereon are automatically controlled on the basis of a failed start recognition (10).

8. Arrangement for carrying out the method according to one or more of the preceding claims, **characterised in that** the starter battery (1) is connectible with the storage battery (1) by way of a current rectifier (7).

9. Arrangement according to claim 8, **characterised in that** the current rectifier (7) delivers a constant current.

10. Arrangement according to claim 8 or 9, **characterised in that** the current rectifier (7) connects the storage battery (5) with the starter battery (1) for a predetermined time.

11. Arrangement according to one or more of the preceding claims, **characterised in that** instead of the storage battery another energy source is used as current source.

## Revendications

1. Procédé pour augmenter la fiabilité au démarrage d'un moteur à combustion interne (4) avec une batterie de starter (1) pouvant être chargée et un accumulateur (5) qui alimente la batterie de starter (1) en courant de charge et où est effectuée pour le démarrage du moteur à combustion (4) à la batterie de starter (1) une décharge de courant de forte intensité, **caractérisé en ce que** le courant de charge est amené à l'intérieur d'un espace de temps limité avant la décharge de courant de forte intensité par un interrupteur (6) et un convertisseur de fréquence (7) de la batterie de starter (1) jusqu'à ce que soit stockée dans la batterie de starter (1) au moins la charge nécessaire pour le démarrage du moteur à combustion, et **en ce que** l'espace de temps est sélectionné par un module de commande (8) de façon qu'une augmentation provoquée par le courant de charge de la tension interne de la batterie de starter (1) n'a pas encore diminuée complètement.

2. Procédé selon la revendication 1, **caractérisé en ce que** la batterie de starter (1), après une tentative de démarrage sans succès, avant le retrait d'un courant additionnel, est chargée par l'accumulateur (5).

3. Procédé selon la revendication 1 ou 2, **caractérisé en ce que** le courant de charge est plus petit que le courant nécessaire pour le démarrage du moteur à combustion.

4. Procédé selon la revendication 1, **caractérisé en ce qu'**après la charge de la batterie de starter (1) et une tentative de démarrage sans succès du moteur à combustion, l'accumulateur est bloqué pendant une courte durée contre l'émission d'un courant de charge à la batterie de starter.

5. Procédé selon l'une des revendications précédentes, **caractérisé en ce qu'**après une tentative de démarrage sans succès du moteur à combustion, une signalisation est produite.

6. Procédé selon l'une ou plusieurs des revendications précédentes, **caractérisé en ce que** la durée de charge dure environ 30 secondes à 2 minutes.

7. Procédé selon l'une des revendications précédentes, **caractérisé en ce que** le déroulement de la recharge de la batterie de starter et la tentative de démarrage ayant ensuite lieu sont commandés automatiquement sur la base d'une détection de démarrage manqué (10).

8. Agencement pour la mise en oeuvre du procédé selon l'une ou plusieurs des revendications précédentes, **caractérisé en ce que** la batterie de starter (1) peut être reliée par un convertisseur de courant (7) à l'accumulateur (1).

9. Agencement selon la revendication 8, **caractérisé en ce que** le convertisseur de courant (7) émet un courant constant.

10. Agencement selon la revendication 8 ou 9, **caractérisé en ce que** le convertisseur de courant (7) relie pendant un temps prédéterminé l'accumulateur à la batterie de starter (1,5).

11. Agencement selon l'une ou plusieurs des revendications précédentes, **caractérisé en ce qu'**il est prévu à la place de l'accumulateur une autre source d'énergie comme source de courant.
